Europäisches Patentamt

European Patent Office

Office européen des brevets

(19)

(11) Veröffentlichungsnummer: **0 289 484**
**B1**

(12) **EUROPÄISCHE PATENTSCHRIFT**

(45) Veröffentlichungstag der Patentschrift:
18.07.90

(51) Int. Cl.⁵: **B60K 23/08**, B60T 8/32

(21) Anmeldenummer: **88890103.0**

(22) Anmeldetag: **27.04.88**

(54) Kraftfahrzeug.

(30) Priorität: **29.04.87 AT 1067/87**

(43) Veröffentlichungstag der Anmeldung:
**02.11.88 Patentblatt 88/44**

(45) Bekanntmachung des Hinweises auf die Patenterteilung:
**18.07.90 Patentblatt 90/29**

(84) Benannte Vertragsstaaten:
**BE DE FR GB IT NL SE**

(56) Entgegenhaltungen:
**EP-A- 0 207 395**
**EP-A- 0 213 654**
**EP-A- 0 216 318**
**GB-A- 2 161 880**

**PATENT ABSTRACTS OF JAPAN, Band 10,**
**Nr. 281 (M-520)[2337], 25. September 1986; &**
**JP-A-61 102 328 (NISSAN MOTOR CO. LTD) 21-05-1986**

(73) Patentinhaber: **STEYR-DAIMLER-PUCH**
**AKTIENGESELLSCHAFT, Franz-Josefs-Kai 51,**
**A-1010 Wien(AT)**

(72) Erfinder: **Sommer, Hans Dieter, Dipl.-Ing.,**
**Auersperggasse 8, A-8010 Graz(AT)**

## Beschreibung

Die Erfindung betrifft ein Kraftfahrzeug mit einer ständig angetriebenen Achse und einer mittels einer elektrischen Hilfseinrichtung willkürlich zuschaltbaren Triebachse.

Derartige Kraftfahrzeuge sind vielfach bekannt, wobei der Antrieb der zuschaltbaren Triebachse einen vergleichsweise geringen technischen Aufwand erfordern. Nachteilig ist jedoch, daß es bei Bremsmanövern während des Allradantriebes, insbesondere dann zu einem unstabilen Fahrverhalten kommen kann, wenn die Räder der beiden Fahrzeugseiten auf Bahnen mit unterschiedlichen Reibbeiwerten rollen. Dieses ungünstige Fahrverhalten ist darauf zurückzuführen, daß sich durch die Koppelung der beiden Achsen eine von der vorgeschriebenen Bremskraftverteilung abweichende Aufteilung der Bremskraft auf die Räder der beiden Achsen ergibt. Selbstverständlich treten solche Stabilitätsverluste vor allem dann auf, wenn bei höherer Fahrgeschwindigkeit stark bzw. plötzlich gebremst wird.

Somit liegt der Erfindung die Aufgabe zugrunde, diesen Mangel zu beseitigen und das eingangs geschilderte Kraftfahrzeug so zu verbessern, daß sich mit verhältnismäßig einfachen Mitteln ein sichereres Fahrverhalten beim Bremsen ergibt.

Die Erfindung löst die gestellte Aufgabe dadurch, daß die elektrische Hilfseinrichtung einen bei Erreichen einer vorbestimmten Fahrgeschwindigkeit selbständig betätigbaren Schalter umfaßt, der bei einem gleichzeitigen Bremsvorgang den Antriebsstrang zur zuschaltbaren Triebachse unterbricht, wobei der Antriebsstrang bis zur Betätigung eines Handschalters 15 unterbrochen bleibt.

Es wird also bei Erreichen der vorbestimmten Fahrgeschwindigkeit der Antriebsstrang der Triebachse unterbrochen, wenn die Betriebsbremse betätigt wird, so daß dann nur mehr eine Achse angetrieben ist und die Gefahren des unstabilen Fahrverhaltens wesentlich herabgesetzt werden.

Um das jeweilige Abschalten der Triebachse erst beim Bremsvorgang und auch erst dann zu erreichen, wenn ein bestimmter Bremsdruck überschritten wird, weist in weiterer Ausbildung der Erfindung die elektrische Hilfseinrichtung einen beim Treten des Bremspedales und/oder einen bei Überschreiten eines vorbestimmten Bremsdruckes bzw. bei plötzlichem Bremsdruckanstieg betätigbaren weiteren Schalter auf.

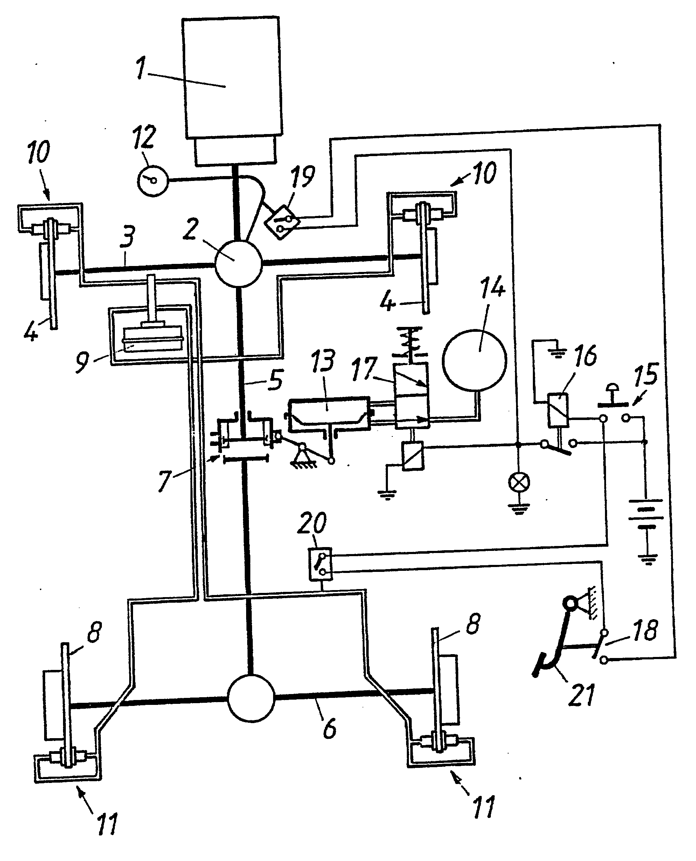

Die Zeichnung zeigt als Ausführungsbeispiel das Schema eines erfindungsgemäßen Kraftfahrzeuges mit einer ständig angetriebenen Vorderachse und einer mittels einer elektrischen Hilfseinrichtung zuschaltbaren, die Hinterachse bildenden Triebachse.

Vom Motor 1 wird über ein Ausgleichgetriebe 2 die Vorderachse 3 angetrieben, wobei von den Vorderrädern nur die Bremsscheiben 4 dargestellt sind. Im Antriebsstrang 5, der zur Hinterachse 6 führt, ist eine mechanische Trennkupplung 7 eingebaut, wobei auch die Hinterräder nur durch die Bremsscheiben 8 angedeutet sind. Vom Bremsdruckgeber 9 führen entsprechende Leitungen zu den Vorderradbremsen 10 einerseits und den Hinterradbremsen 11 anderseits. Mit 12 ist der vom Ausgleichgetriebe 2 der Vorderachse 3 angetriebene Tachometer bezeichnet. Die Trennkupplung 7 ist mit Hilfe einer Unterdruckschaltdose 13 betätigbar, die an einen Unterdruckspeicher 14 angeschlossen ist.

In der dargestellten Stellung ist der Antriebsstrang 5 zur Hinterachse unterbrochen, weil die Trennkupplung 7 geöffnet ist. Soll die Hinterachse 6 zugeschaltet, also die Trennkupplung 7 eingerückt werden, ist die Taste 15 kurzzeitig zu betätigen, so daß das selbsthaltende Umschaltrelais 16 an Spannung gelegt und der Stromkreis zum Magnetschieber 17 geschlossen wird. Der Magnetschieber 17 nimmt dann die Stellung ein, in der die obere Hälfte der Unterdruckschaltdose 13 mit der Unterdruckquelle 14 verbunden und die untere Schaltdosenhälfte belüftet wird, so daß die Trennkupplung 7 die Antriebsverbindung zur Hinterachse herstellt. Da es sich beim Relais 16 um ein selbsthaltendes Relais handelt, bleibt die geschilderte Leitungsverbindung erhalten, bis die Taste 15 neuerlich betätigt wird und das Relais 16 den Stromkreis zum Magnetschieber 17 wieder unterbricht.

Erfindungsgemäß weist nun die elektrische Hilfseinrichtung drei weitere Schalter 18, 19 und 20 auf, von denen der erste bei Betätigung des Bremspedales 21 geschlossen wird, während der Schalter 19 und der Schalter 20 ihre Schließstellung dann erreichen, wenn die Fahrgeschwindigkeit eine vorbestimmte kritische Geschwindigkeit erreicht und der Bremsdruck einen vorbestimmten kritischen Bremsdruck überschreitet. Ist die Hinterachse 6 zugeschaltet, also die Trennkupplung 7 eingerückt, was nur möglich ist, wenn das Umschaltrelais 16 den Stromkreis zum Magnetschieber 17 vorangehend geschlossen hat und wird dann bei Erreichen der kritischen Geschwindigkeit das Bremspedal 21 so betätigt, daß gleichzeitig der kritische Bremsdruck überschritten wird, so sind alle drei Schalter 18, 19 und 20 geschlossen und es wird das Umschaltrelais 16 unabhängig von der Taste 15 derart angeregt, daß es den Stromkreis zum Magnetschieber 17 unterbricht, so daß dieser die dargestellte Stellung einnimmt und die Trennkupplung 7 mit Hilfe der Schaltdose 13 ausgerückt wird.

Es überschreitet nicht den Rahmen der Erfindung, wenn der auf erhöhten Bremsdruck ansprechende Schalter 20 fortgelassen bzw. seine Steuerung so ausgebildet wird, daß er bei Überschreiten eines bestimmten Wertes des Bremsdruckgradienten

$$\left(\frac{dp}{dt}\right),$$

also bei einer sogenannten Schreckbremsung, anspricht.

## Patentansprüche

1. Kraftfahrzeug mit einer ständig angetriebenen Achse (3) und einer mittels einer elektrischen Hilfseinrichtung willkürlich zuschaltbaren Triebachse (6), dadurch gekennzeichnet, daß die elektrische Hilfseinrichtung einen bei Erreichen einer vorbestimmten Fahrgeschwindigkeit selbständig betätigbaren Schalter (18, 19, 20) umfaßt, der bei einem gleichzeitigen Bremsvorgang den Antriebsstrang (5) zur zuschaltbaren Triebachse (6) unterbricht, wobei der Antriebsstrang bis zur Betätigung eines Handschalters (15) unterbrochen bleibt.

2. Kraftfahrzeug nach Anspruch 1, dadurch gekennzeichnet, daß die elektrische Hilfseinrichtung einen beim Treten des Bremspedales (21) und/oder einen bei Überschreiten eines vorbestimmten Bremsdruckes bzw. bei plötzlichem Bremsdruckanstieg

$$(\frac{dp}{dt})$$

betätigbaren weiteren Schalter (18; 20) umfaßt.

**Claims**

1. A motor vehicle comprising a constantly driven axle (3) and a driven axle (6), which is adapted to be arbitrarily connected by an electric auxiliary device, characterized in that the electric auxiliary device comprises a switch (18, 19, 20), which is arranged to be automatically actuated when a predetermined speed of travel is reached and which during a simultaneous braking operation will interrupt the drive train (5) leading to the arbitrarily connectable driven axle (6), and that the drive train will then remain interrupted until a manually operable switch (15) is actuated.

2. A motor vehicle according to claim 1, characterized in that the electric auxiliary device comprises a further switch (18, 20) which is operable in response to a depression of the brake pedal (21), and/or a further switch (18, 20) which is operable in response to a rise of the brake pressure above a predetermined value or in response to a sudden rise

$$(\frac{dp}{dt})$$

of the brake pressure.

**Revendications**

1. Véhicule automobile avec un essieu (3) entraîné en permanence et un essieu moteur (6) pouvant être accouplé à volonté au moyen d'un dispositif électrique auxiliaire, caractérisé en ce que le dispositif électrique auxiliaire comprend un interrupteur (18, 19, 20) actionnable automatiquement quand est atteinte une vitesse de circulation prédéterminée qui, lors d'un freinage simultané, interrompt la chaîne cinématique d'entraînement (5) de l'essieu moteur pouvant être accouplé (6), cette chaîne cinématique d'entraînement restant interrompue jusqu'à la manoeuvre d'un interrupteur manuel (15).

2. Véhicule automobile selon la revendication 1, caractérisé en ce que le dispositif électrique auxiliaire comprend un autre interrupteur (18, 20) manoeuvrable lors de l'action sur la pédale de frein (21), et/ou lors du dépassement d'une pression de freinage prédéterminée d'une élévation brutale de la pression de freinage (dp/dt).

EP 0 289 484 B1